# EUROPEAN PATENT APPLICATION

(11) **EP 1 332 709 A1**
(43) Date of publication of application: **06.08.2003**
(21) Application number: 02006907.6
(22) Date of filing: 26.03.2002
(51) Int. Cl.: A47L 15/46, A47L 15/00

(54) **Dishwasher with a wash water pump control unit and method for operating said dishwasher**

(30) Priority: 31.01.2002 KR 2002005710
(71) Applicant: LG Electronics, Inc., Seoul 150-010 (KR)
(72) Inventor: Han, Dae Yeong, Seoul 157-033 (KR); Lee, Tae Hee, Seoul 150-073 (KR); Choi, Byunk Keol, Wonmi-ku, Buchun-si 420-023 Kyungki-do (KR); Jeon, Si Moon, Seocho-ku, Seoul 137-062 (KR)
(74) Representative: TER MEER STEINMEISTER & PARTNER GbR

(57) **Abstract**

Disclosed are a dishwasher and a method for operating the same. The dishwasher comprises an interior tub in which dishes to be washed are located; a wash pump for pumping wash liquid for washing the dishes located in the interior tub; a pump motor for driving the wash pump; spraying means for spraying wash liquid against the dishes; and a control unit for regulating an rpm of the pump motor thereby to adjust a spraying pressure of wash liquid sprayed from the spraying means. The method for operating a dishwasher comprises the steps of sensing a soiled degree of wash liquid upon washing dishes located in the dishwasher; regulating an rpm of a pump motor for spraying wash liquid against the dishes, depending upon a soiled degree sensed in the soiled degree sensing step; and adjusting a wash liquid spraying pressure depending upon an rpm regulated in the rpm regulating step.

## Description

### BACKGROUND OF THE INVENTION

### Field of the Invention

The present invention relates to a dishwasher and a method for operating the same, and more particularly, the present invention relates to a dishwasher and a method for operating the same, wherein a wash liquid spraying pressure is adjusted depending upon a soiled degree of dishes when washing the dishes, to improve an energy utilization efficiency and prevent the dishes from being damaged.

### Description of the Related Art

These days, a dishwasher serving as an electric appliance for washing dishes received therein has been widely used throughout the world in many homes and in commercial establishments such as restaurants and the like.

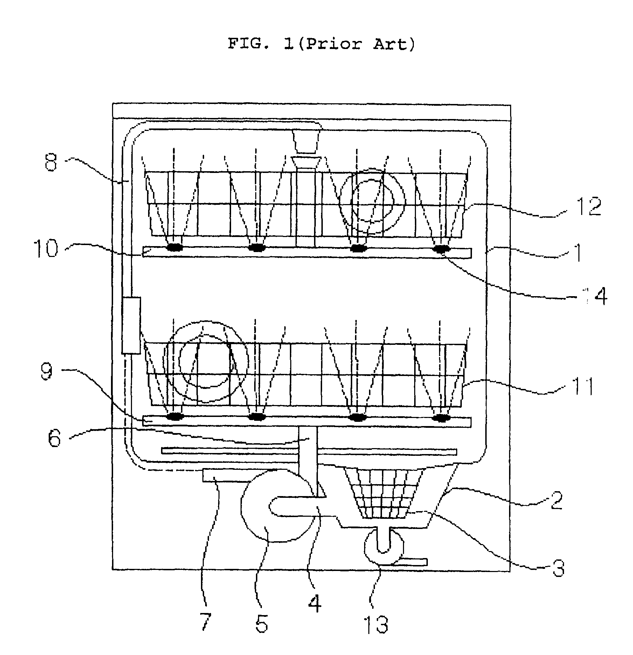

Hereafter, a construction of a conventional dishwasher will be described with reference to FIG. 1.

The conventional dishwasher includes an interior tub 1. Wash liquid filled in the interior tub 1 is drawn by a wash pump 5 to be supplied to lower and upper wash arms 9 and 10 through flow paths 6 and 7. Wash liquid supplied to the lower and upper wash arms 9 and 10 is sprayed, through nozzles 14 formed in them, against dishes supported on lower and upper dish racks 11 and 12, to remove soils therefrom. Wash liquid including the soils removed from the dishes flows toward a bottom of the interior tub 1 to be collected in a sump 2. The wash liquid collected in the sump 2 passes through a filter 3 to separate the soils. Then, the filtered wash liquid is drawn again through a flow path 4 by the wash pump 5 to be recirculated over the dishes. After a dishwashing operation is completed, wash liquid finally collected in the sump 2 is discharged out of the tub 1 along with the separated soils through a drain pump 13.

However, the conventional dishwasher constructed as mentioned above suffers from defects in that, since an rpm of a pump motor for driving the wash pump 5 is kept constant and thereby the wash pump 5 sprays wash liquid at a constant spraying pressure through the nozzles 14, a dishwashing procedure proceeds regardless of a soiled degree of dishes.

As a consequence, even in the case of washing dishes of a low soiled degree, a dishwashing procedure set to be suited to wash dishes of a high soiled degree is implemented, and therefore, waste of wash liquid and energy is caused. Further, as the case may be, when washing dishes made of a material, which is expensive and has inferior impact resistance, such as crystal and the like, surfaces of the dishes can be damaged.

### SUMMARY OF THE INVENTION

Accordingly, the present invention has been made in an effort to solve the problems occurring in the related art, and an object of the present invention is to provide a dishwasher and a method for operating the same, wherein a wash liquid spraying pressure can be adjusted depending upon a soiled degree of dishes when washing the dishes, to avoid waste of wash liquid and energy, and a wash liquid spraying pressure can be adjusted as desired by a user, to protect dishes having inferior impact resistance.

In order to achieve the above object, according to one aspect of the present invention, there is provided a dishwasher comprising: an interior tub in which dishes to be washed are located; a wash pump for pumping wash liquid for washing the dishes located in the interior tub; a pump motor for driving the wash pump; spraying means for spraying wash liquid against the dishes; and a control unit for regulating an rpm of the pump motor thereby to adjust a spraying pressure of wash liquid sprayed from the spraying means.

According to another aspect of the present invention, there is provided a method for operating a dishwasher, comprising the steps of: sensing a soiled degree of wash liquid upon washing dishes located in the dishwasher; regulating an rpm of a pump motor for spraying wash liquid against the dishes, depending upon a soiled degree sensed in the soiled degree sensing step; and adjusting a wash liquid spraying pressure depending upon an rpm regulated in the rpm regulating step.

### BRIEF DESCRIPTION OF THE DRAWINGS

The above objects, and other features and advantages of the present invention will become more apparent after a reading of the following detailed description when taken in conjunction with the drawings, in which:
FIG. 1 is a front view illustrating a conventional dishwasher;
FIG. 2 is a block diagram illustrating a construction of a dishwasher in accordance with an embodiment of the present invention;
FIGs. 3a through 3c are graphs illustrating waveforms of power inputted to a pump motor during operation of the dishwasher according to the present invention; and
FIG. 4 is a flow chart for explaining a method for operating the dishwasher according to the present invention.

### DETAILED DESCRIPTION OF PREFERRED EMBODIMENTS

Reference will now be made in greater detail to a preferred embodiment of the invention, an example of which is illustrated in the accompanying drawings. Wherever possible, the same reference numerals will be used throughout the drawings and the description to refer to the same or like parts.

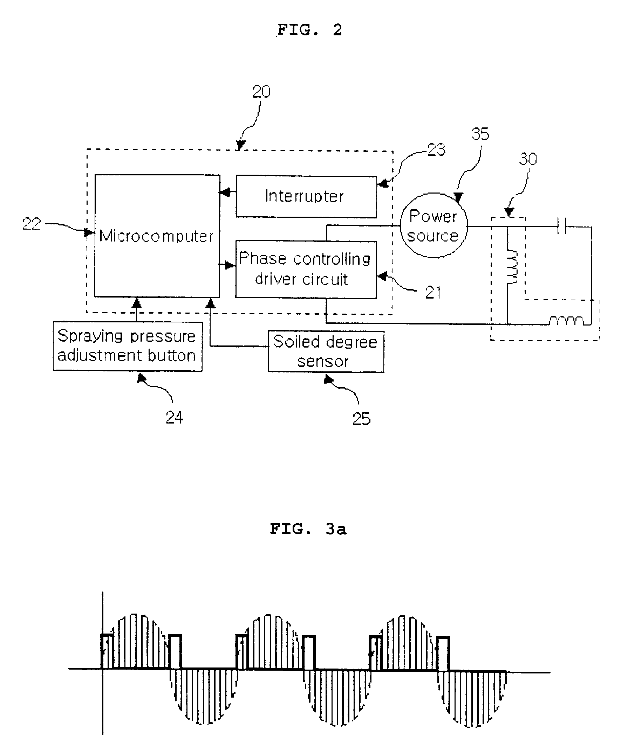

A dishwasher in accordance with an embodiment of the present invention includes, as shown in FIG. 2, a pump motor 30 and a control unit 20. The pump motor 30 drives a wash pump (not shown) which pumps wash liquid toward spraying means (not shown) for spraying wash liquid to wash dishes located in an interior tub (not shown). The control unit 20 functions to adjust a wash liquid spraying pressure by regulating an rpm of the pump motor 30.

Here, the control unit 20 comprises a microcomputer 22 and a phase controlling driver circuit 21. The microcomputer 22 generates and outputs a trigger signal for controlling supply of power from a power source 35 to the pump motor 30. The phase controlling driver circuit 21 controls a phase of power to be supplied from the power source 35 to the pump motor 30 in response to the trigger signal generated and outputted by the microcomputer 22 and applies the resulting power to the pump motor 30.

That is to say, the microcomputer 22 calculates an optimal rpm of the pump motor 30, and generates and outputs a trigger signal which corresponds to the calculated rpm of the pump motor 30. Then, in response to the trigger signal, the phase controlling driver circuit 21 controls a phase of power to be supplied from the power source 35 to the pump motor 30. In this way, an rpm of the pump motor 30 is regulated.

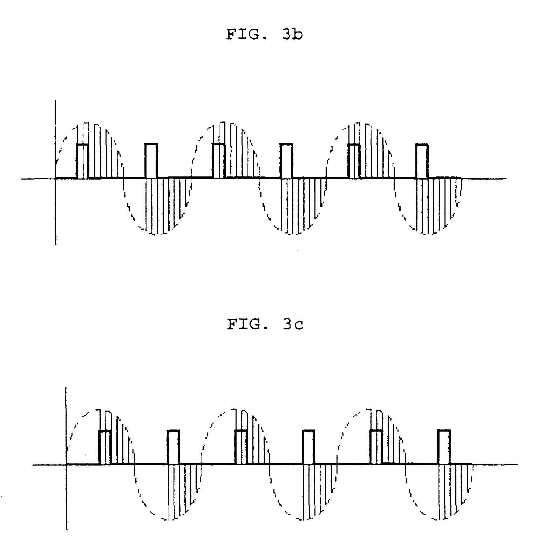

In other words, a phase of power supplied from the power source 35 to the pump motor 30 is controlled in response to the trigger signal outputted from the microcomputer 22. In this regard, FIGs. 3a through 3c are graphs illustrating waveforms of power outputted from the power source 35 and inputted to the pump motor 30 in response to trigger signals.

Namely, power is supplied to the pump motor 30 for an interval which extends from a position of a trigger signal generated and outputted by the microcomputer 22 to a zero-crossing point where a phase of power from the power source 35 is inverted, and power supply is cut off for another interval which extends from the zero-crossing point to a position of a next trigger signal. Consequently, by controlling a position of a trigger signal, power supplied to the pump motor 30 is changed, and thereby, as an rpm of the pump motor 30 is regulated, a wash liquid spraying pressure is adjusted.

The hatched portions of FIGs. 3a through 3c represent amounts of power actually supplied to the pump motor 30 in response to trigger signals. In FIGs. 3a through 3c, the dashed lines illustrate waveforms of power outputted from the power source 35, and the solid lines illustrate waveforms of trigger signals outputted from the microcomputer 22. As can be readily seen from FIGs. 3a through 3c, an interval, through which power is supplied to the pump motor 30, extends from a position of a trigger signal to a next zero-crossing point. That is to say, power supply to the pump motor 30 has no relationship with a width of a trigger signal, and is determined by a position where a trigger signal is initially splashed.

FIGs. 3a through 3c respectively illustrate waveforms in the case that wash liquid is sprayed at a high pressure, an intermediate pressure and a low pressure. In FIG. 3a, since an entire amount of power is inputted to the pump motor 30, the pump motor 30 is rotated at a high rpm. In FIGs. 3b and 3c, as only portions of power are inputted to the pump motor 30, slip of the pump motor 30 is increased, and thus, the pump motor 30 is rotated at low rpms.

The dishwasher according to the present invention further includes a soiled degree sensor 25 for sensing a soiled degree of wash liquid while washing the dishes. The soiled degree sensor 25 senses a soil concentration in wash liquid and calculates a rate of concentration change. Then, the soiled degree sensor 25 outputs the sensed soil concentration and the calculated rate of concentration change to the microcomputer 22.

The microcomputer 22 outputs a control signal to the phase controlling driver circuit 21, to adjust a wash liquid spraying pressure depending upon a soil concentration and a rate of concentration change sensed and calculated by the soiled degree sensor 25. Resultingly, as an amount of power to be supplied from the power source 35 to the pump motor 30 is altered, a wash liquid spraying pressure is adjusted.

The dishwasher according to the present invention still further includes a spraying pressure adjustment button 24 for allowing a wash liquid spraying pressure to be manually adjusted as desired by a user. As the user manipulates the spraying pressure adjustment button 24, an instruction for adjusting a wash liquid spraying pressure as desired the user is inputted to the microcomputer 22, and the microcomputer 22 transmits a control signal to the phase controlling driver circuit 21 to regulate an rpm of the pump motor 30 in response to the inputted instruction.

The control unit 20 of the dishwasher controls other programmed tasks which are required for washing dishes in the dishwasher, such as actuation of wash and drain pumps, refilling of fresh wash liquid, driving of a heater, etc. The control unit 20 is configured to implement a dishwashing procedure based on signals sensed by a variety of sensors such as a level sensor or a pressure sensor for sensing an amount of wash liquid filled in the tub, a temperature sensor for preventing the dishwasher from being overheated, and the like.

Moreover, the control unit 20 further comprises an interrupter 23. The interrupter 23 is connected with the microcomputer 22 to check a zero-crossing point of the power from the power source 35, generate a zero-crossing point signal and prevent an unnecessary signal from being transmitted to the microcomputer 22.

In the present invention, the control unit 20 of the dishwasher is configured to alter an amount of current applied to the pump motor 30 depending upon a soiled degree sensed by the soiled degree sensor 25 and thereby regulate an rpm of the pump motor 30. Further, the control unit 20 allows an rpm of the pump motor 30 to be manually regulated as desired by the user.

In other words, when the user washes dishes made of a material, which is expensive and has inferior impact resistance, such as crystal and the like, by manipulating the spraying pressure adjustment button 24 to select a desired wash liquid spraying pressure upon implementing a dishwashing procedure, the control unit 20 controls an amount of current in response to the spraying pressure adjustment instruction inputted from the spraying pressure adjustment button 24.

Wash liquid spraying pressures, which are determined depending upon soil concentrations and rates of concentration change sensed and calculated by the soiled degree sensor according to the present invention, are given in TABLE 1.

**TABLE 1**

| Soil Concentration | Rate of Concentration Change | Wash Liquid Spraying Pressure |
|---|---|---|
| High | High | High |
| | Intermediate | Intermediate |
| | Constant | Low |
| Intermediate | High | Intermediate |
| | Intermediate | Intermediate |
| | Constant | Low |
| Low | Intermediate | Intermediate |
| | Constant | Low |

As can be readily seen from TABLE 1, in the case that a soil concentration is high and a rate of concentration change is high, the control unit 20 determines that dishes are soiled to a great extent, regulates an rpm of the pump motor 30 to high, and supplies wash liquid under a high pressure. Thus, a high pressure of wash liquid is sprayed through the spraying means. In the case that a soil concentration is high and a rate of concentration change is intermediate, the control unit 20 determines that soils are substantially removed from the dishes, and allows an intermediate pressure of wash liquid to be sprayed through the spraying means. Further, in the case that a soil concentration is low and a rate of concentration change is low, that is, constant, the control unit 20 determines that dishes are soiled to a slight extent, and allow a low pressure of wash liquid to be sprayed through the spraying means for a short period of time, whereby an amount of wash liquid drawn by the wash pump is decreased, a dishwashing time is shortened and unnecessary energy consumption is avoided.

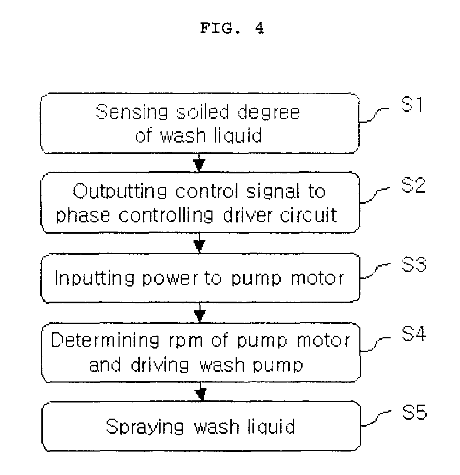

FIG. 4 is a flow chart for explaining a method for operating the dishwasher according to the present invention.

In the method according to the present invention, in a first step S1, as a dishwashing procedure proceeds, the soiled degree sensor senses a soil concentration and calculates a rate of concentration change.

In a second step S2, the control unit 20 determines, based on TABLE 1, a wash liquid spraying pressure depending upon the soil concentration and rate of concentration change sensed and calculated by the soiled degree sensor, and then, outputs a control signal to the phase controlling driver circuit.

In a third step S3, the phase controlling driver circuit switches the power source in response to the trigger signal inputted thereto to supply power to the pump motor. Here, as described above with reference to FIGs. 3a through 3c, the power supplied to the pump motor is regulated depending upon a position of the trigger signal.

In a fourth step S4, as an rpm of the pump motor is determined depending upon the power supplied in the third step, the pump motor drives the wash pump.

In a fifth step S5, the wash pump pumps wash liquid and sprays the wash liquid through the spraying means.

As apparent from the above description, the dishwasher and the method for operating the same according to the present invention provide advantages in that, since a soiled degree of dishes located in an interior tub of the dishwasher to be washed is sensed and a magnitude of current inputted to a pump motor is regulated depending upon the soiled degree thereby to adjust a wash liquid spraying pressure, waste of wash liquid and energy is avoided. Also, in the case of washing dishes made of a material, which is expensive and has inferior impact resistance, such as crystal and the like, because it is possible to adjust a wash liquid spraying pressure as desired by a user, surfaces of the dishes can be protected from being damaged.

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. A dishwasher comprising:
an interior tub in which dishes to be washed are located;
a wash pump for pumping wash liquid for washing the dishes located in the interior tub;
a pump motor for driving the wash pump;
spraying means for spraying wash liquid against the dishes; and
a control unit for regulating an rpm of the pump motor thereby to adjust a spraying pressure of wash liquid sprayed from the spraying means.

2. The dishwasher as set forth in claim 1, wherein the control unit regulates the rpm of the pump motor by controlling a phase of power inputted to the pump motor.

3. The dishwasher as set forth in claim 1, further comprising:
a soiled degree sensor for sensing a soiled degree of wash liquid upon washing the dishes.

4. The dishwasher as set forth in claim 3, wherein the soiled degree sensor senses a soil concentration in wash liquid and calculates a rate of concentration change.

5. The dishwasher as set forth in claim 4, wherein, when a sensed soil concentration is constant but a calculated rate of concentration change is decreased, the control unit implements a next dishwashing procedure.

6. The dishwasher as set forth in claim 2, wherein the control unit comprises a microcomputer for generating and outputting a trigger signal to control the supply of power from a power source to the pump motor; and a phase controlling driver circuit for controlling a phase of power to be supplied from the power source to the pump motor in response to the trigger signal generated and outputted by the microcomputer and applying the resulting power to the pump motor.

7. The dishwasher as set forth in claim 6, wherein the microcomputer controls the phase controlling driver circuit so that a first rpm of the pump motor when a soiled degree sensed by the soiled degree sensor is higher than a reference value is greater than a second rpm of the pump motor when a soiled degree sensed by the soiled degree sensor is lower than the reference value, whereby a first wash liquid spraying pressure in the former case is greater than a second wash liquid spraying pressure in the latter case.

8. The dishwasher as set forth in claim 1, further comprising:
a spraying pressure adjustment button for allowing an rpm of the pump motor to be regulated as desired by a user.

9. A method for operating a dishwasher, comprising the steps of:
sensing a soiled degree of wash liquid upon washing dishes located in the dishwasher;
regulating an rpm of a pump motor for spraying wash liquid against the dishes, depending upon a soiled degree sensed in the soiled degree sensing step; and
adjusting a wash liquid spraying pressure depending upon an rpm regulated in the rpm regulating step.

10. The method as set forth in claim 9, wherein, in the soiled degree sensing step, a soil concentration in wash liquid is sensed and a rate of concentration change is calculated.

11. The method as set forth in claim 10, wherein the rpm regulating step comprises the sub-step of:
implementing a next dishwashing procedure when a soil concentration sensed in the soiled degree sensing step is constant but a calculated rate of concentration change is decreased.

12. The method as set forth in claim 9, wherein, in the rpm regulating step, an rpm of the pump motor is regulated in a manner such that a first level of power inputted to the pump motor when a soiled degree sensed in the soiled degree sensing step is higher than a reference value is greater than a second level of power inputted to the pump motor when a soiled degree sensed in the soiled degree sensing step is lower than the reference value.

13. The method as set forth in claim 9, further comprising the step of:
inputting, through a user, an instruction for adjusting a wash liquid spraying pressure; and
wherein an rpm of the pump motor is regulated in the rpm regulating step in response to the inputted instruction for adjusting a wash liquid spraying pressure.

## Amended claims

### Amended claims in accordance with Rule 86(2) EPC.

**1.** A dishwasher comprising:
an interior tub in which dishes to be washed are located;
a wash pump for pumping wash liquid for washing the dishes located in the interior tub;
a pump motor for driving the wash pump;
spraying means for spraying wash liquid against the dishes; and
a control unit for regulating an rpm of the pump motor thereby to adjust a spraying pressure of wash liquid sprayed from the spraying means, wherein the control unit regulates the rpm of the pump motor by controlling a phase of power inputted to the pump motor.

**2.** The dishwasher as set forth in claim 1, further comprising:
a soiled degree sensor for sensing a soiled degree of wash liquid upon washing the dishes.

**3.** The dishwasher as set forth in claim 2, wherein the soiled degree sensor senses a soil concentration in wash liquid and calculates a rate of concentration change.

**4.** The dishwasher as set forth in claim 3, wherein, when a sensed soil concentration is constant but a calculated rate of concentration change is decreased, the control unit implements a next dishwashing procedure.

**5.** The dishwasher as set forth in claim 1, wherein the control unit comprises a microcomputer for generating and outputting a trigger signal to control the supply of power from a power source to the pump motor; and a phase controlling driver circuit for controlling a phase of power to be supplied from the power source to the pump motor in response to the trigger signal generated and outputted by the microcomputer and applying the resulting power to the pump motor.

**6.** The dishwasher as set forth in claim 5, wherein the microcomputer controls the phase controlling driver circuit so that a first rpm of the pump motor when a soiled degree sensed by the soiled degree sensor is higher than a reference value is greater than a second rpm of the pump motor when a soiled degree sensed by the soiled degree sensor is lower than the reference value, whereby a first wash liquid spraying pressure in the former case is greater than a second wash liquid spraying pressure in the latter case.

**7.** The dishwasher as set forth in claim 1, further comprising:
a spraying pressure adjustment button for allowing an rpm of the pump motor to be regulated as desired by a user.

**8.** A method for operating a dishwasher, comprising the steps of:
sensing a soiled degree of wash liquid upon washing dishes located in the dishwasher;
regulating an rpm of a pump motor for spraying wash liquid against the dishes, depending upon a soiled degree sensed in the soiled degree sensing step; and
adjusting a wash liquid spraying pressure depending upon an rpm regulated in the rpm regulating step, wherein, in the soiled degree sensing step, a soil concentration in wash liquid is sensed and a rate of concentration change is calculated.

**9.** The method as set forth in claim 8, wherein the rpm regulating step comprises the sub-step of:
implementing a next dishwashing procedure when a soil concentration sensed in the soiled degree sensing step is constant but a calculated rate of concentration change is decreased.

**10.** A method for operating a dishwasher, comprising the steps of:
sensing a soiled degree of wash liquid upon washing dishes located in the dishwasher;
regulating an rpm of a pump motor for spraying wash liquid against the dishes, depending upon a soiled degree sensed in the soiled degree sensing step; and
adjusting a wash liquid spraying pressure depending upon an rpm regulated in the rpm regulating step, wherein, in the rpm regulating step, an rpm of the pump motor is regulated in a manner such that a first level of power inputted to the pump motor when a soiled degree sensed in the soiled degree sensing step is higher than a reference value is greater than a second level of power inputted to the pump motor when a soiled degree sensed in the soiled degree sensing step is lower than the reference value.

**11.** A method for operating a dishwasher, comprising the steps of:
sensing a soiled degree of wash liquid upon washing dishes located in the dishwasher;
regulating an rpm of a pump motor for spraying wash liquid against the dishes, depending upon a soiled degree sensed in the soiled degree sensing step; and
adjusting a wash liquid spraying pressure depending upon an rpm regulated in the rpm regulating step, further comprising the step of:
inputting, through a user, an instruction for adjusting a wash liquid spraying pressure; and
wherein an rpm of the pump motor is regulated in the rpm regulating step in response to the inputted instruction for adjusting a wash liquid spraying pressure.
